# EUROPÄISCHE PATENTSCHRIFT

(11) **EP 1 196 067 B1**
(45) Veröffentlichungstag und Bekanntmachung des Hinweises auf die Patenterteilung: **14.05.2003**
(21) Anmeldenummer: 00951218.7
(22) Anmeldetag: 10.06.2000
(51) Int. Cl.: A47J 27/21, C02F 1/32, A61L 2/10

(54) **GERÄT FÜR DAS ENTKEIMEN WÄSSRIGER LÖSUNGEN**
DEVICE FOR STERILISING AQUEOUS MEDIA
APPAREIL POUR STERILISER DES MILIEUX AQUEUX

(30) Priorität: 22.06.1999 DE 29910816 U
(43) Veröffentlichungstag der Anmeldung: 17.04.2002
(73) Patentinhaber: Wismeth, Wolfgang, 90765 Fürth (DE)
(72) Erfinder: Wismeth, Wolfgang, 90765 Fürth (DE)
(74) Vertreter: Schuhmann, Albrecht
(86) Internationale Anmeldenummer: DE0001913
(87) Internationale Veröffentlichungsnummer: WO00078191

(56) Entgegenhaltungen:
- WO-A-97/06108
- WO-A-98/34073
- GB-A- 1 356 502
- GB-A- 2 258 141
- US-A- 4 762 613

## Beschreibung

Die vorliegende Erfindung betrifft ein Gerät für das Entkeimen wässriger Medien mit den Merkmalen des Oberbegriffs des Anspruchs 1.

Mit Viren, Bakterien oder Schmarotzern verunreinigtes Wasser stellt weltweit ein großes Problem dar. Häufig ist eine geregelte Trinkwasserversorgung mit Filterung, Chlorierung oder Ozonierung in größeren Anlagen nicht vorhanden. In jüngerer Zeit wird auch die Bestrahlung mit ultravioletten Strahlen zur Entkeimung eingesetzt, wobei das UV-C Spektrum mit vorzugsweise 254 nm Wellenlänge verwendet wird. Es sind wasserdichte Strahlereinheiten aus Quarzglas bekannt, die als Taucheinheiten eingesetzt werden. Es handelt sich jedoch in der Regel um mittlere bis große Entkeimungsanlagen, die zum Teil auch auf Durchflußbasis beruhen. Ein Gerät mit einer fest angeordneten UV-Lampe und einem Wasserzu- und Ablauf ist beispielsweise aus der DE-U-94 20 752 bekannt. Ein Behälter mit einer feststehenden UV-Strahlenquelle in einer Tauchglocke ist aus der DE-C-25 27 009 bekannt. Eine energieintensive Alternative zu solchen Behandlungen ist schließlich das Abkochen, das über ca. 10 Minuten erfolgen muß, um eine ausreichende Keimfreiheit zu gewährleisten. Eine transportable Filterpatrone mit einer Stromversorgung und einem dafür speziell ausgebildeten Transportkoffer ist in der PCT-WO97/06108 offenbart.

Aufgabe der vorliegenden Erfindung ist es, ein Gerät für das Entkeimen wässriger Medien zu schaffen, das mit sehr niedriger Energie betrieben werden kann, das äußerst flexibel im Einsatz ist und leicht mitgeführt werden kann und das in kurzer Zeit kleinere entkeimte Wassermengen bereitstellen kann, wobei für eine hohe Betriebssicherheit gesorgt ist.

Diese Aufgabe wird mit den in Anspruch 1 genannten Merkmalen gelöst. Vorteilhafte Ausführungen und Weiterentwicklungen der Erfindung sind in den weiteren Ansprüchen umfaßt.

Erfindungsgemäß ist ein Gerät für das Entkeimen wässriger Medien, insbesondere für die Erzeugung von Trinkwasser, wobei das wässrige Medium der Bestrahlung einer ultravioletter Strahlung ausgesetzt wird und diese Bestrahlung von einem röhrenförmigen, wasserdichten UV-Strahler ausgeht, dadurch gekennzeichnet, daß der Strahler fest in einem Behälter angeordnet ist, daß an dem Behälter eine elektronische Steuereinheit für die Steuerung des Strahlers angeordnet ist, und daß die elektronische Steuereinheit mit einem Anschluß für eine Stromversorgung versehen ist.

Vorzugsweise werden die elektronische Steuereinheit und der Strahler mit einer Spannung von ca. 12 Volt Gleichstrom (10,5 V bis 14,5 V) betrieben, wobei dieser Strom mittels eines Umformers aus der Netzspannung bezogen werden kann, nach einer bevorzugten Ausführung jedoch als Solarstrom eingespeist wird. Grundsätzlich ist es jedoch auch möglich, die Steuereinheit so auszulegen, daß das Gerät mit Netzspannung betrieben werden kann.

Vorzugsweise weist der Behälter einen Boden auf und die elektronische Steuereinheit ist in einem Gehäuse unterhalb des Bodens angeordnct. Das Gerät wird durch Einstecken eines Steckers oder mittels eines Einschalters eingeschaltet. Vorzugsweise ist ein Einschalter für die elektronische Steuereinheit vorhanden und die elektronische Steuereinheit einen Timer aufweist, der das Gerät nach einem bestimmten Zeitraum ausschaltet. Selbstverständlich kann statt dessen auch ein Ausschalter vorhanden scin. Vorzugsweise weist der Behälter einen Deckel auf und ein Öffnen des Behälters löst ein Abschalten des Strahlers ausl.

Nach einer bevorzugten Ausführung der Erfindung ist der Querschnitt des Geräts im wesentlichen rund oder oval, wobei es herkömmlichen Wasserkochern ähnelt und der Strahler ist im wesentlichen entlang seiner Mittelachse auf dem Boden angeordnet und durch diesen mit der Steuereinheit verbunden.

Das Gerät kann mit einer Erhitzungsvorrichtung für das wässrige Medium versehen sein.

Nach einer bevorzugten Ausführung der Erfindung liegt es als es als Set mit einer Stromzuführung und einem Solarmodul vor.

Im folgenden wird die Erfindung anhand von Zeichnungen beispielhaft näher beschrieben. Dabei zeigen:
Fig. 1 eine schematische Darstellung eines Sets aus Gerät, Stromzuführung und Solarmodul;
Fig. 2 ein Schaltschema der elektronischen Steuereinheit

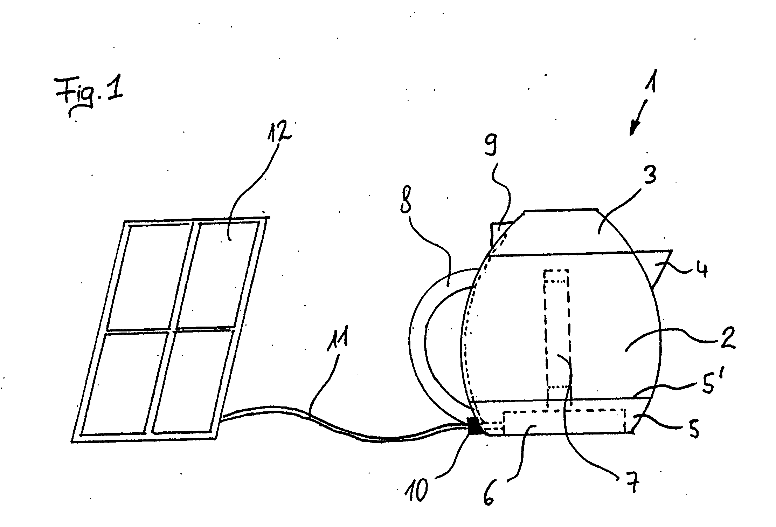

Fig. 1 zeigt ein erfindungsgemäßes Gerät 1 mit einem Behälter 2, einem aufklappbaren Deckel 3, einem Boden 5' und einem von diesem abgetrennten Gehäuse 5. Das Gerät 1 weist in bekannter Weise einen Handgriff 8 und eine Tülle 4 auf. In dem Gehäuse 5 unter dem Boden 5' ist eine elektronische Steuereinheit 6 angeordnet, die mit einem Stromanschluß 10 für eine Stromversorgung 11 verbunden ist, die an ein Solarmodul 12 angeschlossen ist und die die elektronische Steuereinheit 6 mit 12 V Gleichstrom versorgt. Die elektronische Steuereinheit 6 steuert einen UV-Strahler 7, der senkrecht auf dem Boden 5' stehend in dem Behälter 2 angeordnet ist. Das Gerät 1 besitzt einen Einschalter 9, mit dem der UV-Strahler eingeschaltet werden kann.

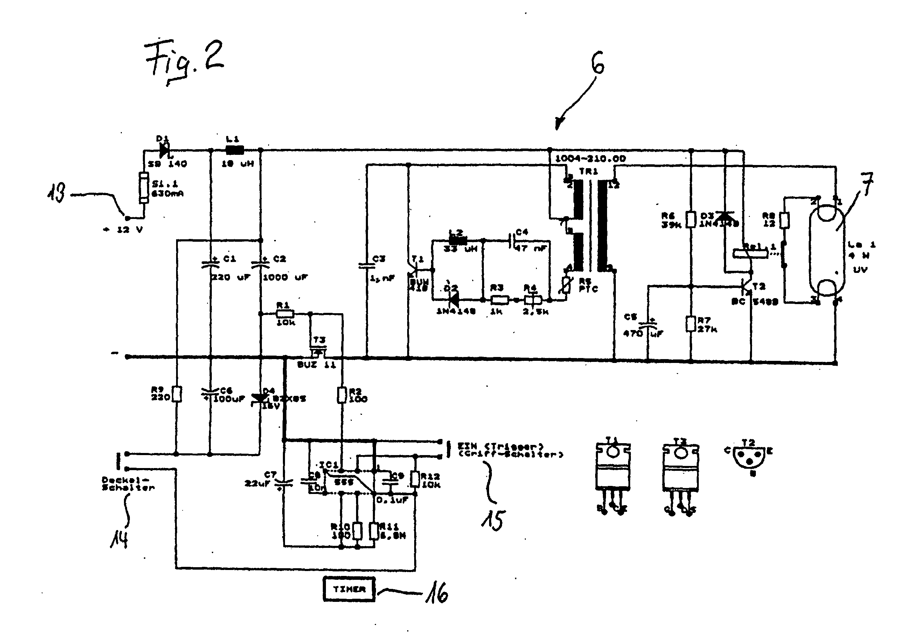

Fig. 2 verdeutlicht anhand eines Schaltschemas die weiteren Merkmale der elektronischen Steuereinheit 6, die aus an sich bekannten Elementen, wie Transistoren T, einem IC, Dioden D, Kondensatoren C, Widerständen R und dergleichen aufgebaut ist und auf einer Leiterplatte angeordnet ist. Die Schaltung weist einen Eingang 13 für die 12 V Gleichstromspannung auf. Über den Einschalter 15 wird das Gerät eingeschaltet. Das Abschalten erfolgt nach Ablauf einer bestimmten Zeitspanne (z.B. 2-6 Minuten), die geeignet ist, eine ausreichende Keimfreiheit zu gewährleisten, durch einen Timer 16, der mit dem Einschalten aktiviert wird. Wird jedoch vor Ablauf dieser Zeitspanne der Deckel 3 geöffnet, erfolgt eine automatische Abschaltung über den Deckelschalter 14, um die Augen eines Benutzers zu schonen. Die Steuereinheit 6 versorgt und schaltet den UV-Strahler 7, der eine Leistung von beispielsweise 4 Watt aufnimmt.

## Patentansprüche

1. Gerät für das Entkeimen wässriger Medien, insbesondere für die Erzeugung von Trinkwasser,
wobei das wässrige Medium der Bestrahlung einer ultravioletter Strahlung ausgesetzt wird und diese Bestrahlung von einem röhrenförmigen, wasserdichten UV-Strahler ausgeht,
wobei der Strahler (7) fest in einem Behälter (2) mit rundem oder ovalem Querschnitt angeordnet ist,
wobei an dem Behälter (2) eine elektronische Steuereinheit (6) für die Steuerung des Strahlers (7) angeordnet ist,
und wobei die elektronische Steuereinheit (6) mit einem Anschluß (10) für eine Stromversorgung versehen ist,
**dadurch gekennzeichnet,**
**daß** der Behälter (2) einen aufklappbaren Deckel (3) aufweist und mit einem Handgriff (8) versehen ist,
und **daß** der Strahler (7) im wesentlichen entlang der Mittelachse des Geräts (1) angeordnet ist.

2. Gerät nach Anspruch 1,
**dadurch gekennzeichnet,**
**daß** die elektronische Steuereinheit (6) und der Strahler (7) mit einer Spannung von 12 Volt Gleichstrom betrieben werden.

3. Gerät nach Anspruch 1 oder 2,
**dadurch gekennzeichnet,**
**daß** der Behälter (2) einen Boden aufweist und daß die elektronische Steuereinheit (5) in einem Gehäuse (5) unterhalb des Bodens angeordnet ist.

4. Gerät nach einem der vorhergehenden Ansprüche,
**dadurch gekennzeichnet,**
**daß** ein Einschalter für die elektronische Steuereinheit (6) vorhanden ist,
**daß** die elektronische Steuereinheit (6) einen Timer (16) aufweist,
und **daß** die elektronische Steuereinheit (6) das Gerät (1) nach einem bestimmten Zeitraum ausschaltet.

5. Gerät nach einem der vorhergehenden Ansprüche,
**dadurch gekennzeichnet,**
**daß** ein Öffnen des Behälters ein (2) Abschalten des Strahlers (7) auslöst.

6. Gerät nach einem der vorhergehenden Ansprüche,
**dadurch gekennzeichnet,**
**daß** es mit einer Erhitzungsvorrichtung für das wässrige Medium versehen ist.

7. Gerät nach einem der Ansprüche 2 - 6,
**dadurch gekennzeichnet,**
**daß** es als Set mit einer Stromzuführung und einem Solarmodul (12) vorhanden ist.

## Claims

1. A device for sterilizing aqueous media, more particularly for producing drinking water,
wherein the aqueous medium is subjected to irradiation with ultraviolet radiation and this irradiation originates from a tubular, waterproof UV radiation source,
wherein the radiation source (7) is arranged so as to be fixed in a vessel (2) with a round or oval cross-section,
wherein an electronic control unit (6) for controlling the radiation source (7) is arranged on the vessel (2),
and wherein the electronic control unit (6) is provided with a connection (10) for a power supply,
**characterised**
**in that** the vessel (2) has a hinged lid (3) and is provided with a handle (8),
and **in that** the radiation source (7) is arranged substantially along the centre axis of the device (1).

2. A device according to Claim 1,
**characterised**
**in that** the electronic control unit (6) and the radiation source (7) are operated with a 12 volt direct current voltage.

3. A device according to Claim 1 or 2,
**characterised**
**in that** the vessel (2) has a base and in that the electronic control unit (5) is arranged in a housing (5) underneath the base.

4. A device according to any one of the preceding Claims,
**characterised**
**in that** there is an on-switch for the electronic control unit (6),
**in that** the electronic control unit (6) has a timer (16),
and **in that** the electronic control unit (6) switches the device (1) off after a specific period of time.

5. A device according to any one of the preceding Claims,
**characterised**
**in that** opening the vessel (2) triggers the switching off of the radiation source (7).

6. A device according to any one of the preceding Claims,
**characterised**
**in that** it is provided with a heating device for the aqueous medium.

7. A device according to any one of Claims 2 - 6,
**characterised**
**in that** it is available as a set with a power supply and a solar module (12).

## Revendications

1. Appareil de stérilisation de matières aqueuses, en particulier pour produire de l'eau potable, dans lequel
le médium aqueux est irradié avec un rayonnement ultraviolet et cette irradiation est réalisée au moyen d'un émetteur UV de forme tubulaire et étanche à l'eau,
l'émetteur (7) est disposé fixe dans un conteneur (2) de section circulaire ou ovale,
une unité de commande électronique (6) pour la commande de l'émetteur (7) est disposée dans le conteneur (2), et
l'unité de commande électronique (6) est dotée d'un raccord (10) pour une alimentation en courant,
**caractérisé en ce que** le conteneur (2) comporte un couvercle rabattable (3) et est doté d'une poignée (8) et
**en ce que** l'émetteur (7) est disposé sensiblement le long de l'axe médian de l'appareil (1).

2. Appareil selon la revendication 1, **caractérisé en ce que** l'unité électronique (6) et l'émetteur (7) sont utilisés avec une tension de 12 volts.

3. Appareil selon la revendication 1 ou 2, **caractérisé en ce que** le conteneur (2) comporte un fond et **en ce que** l'unité électronique (5) est disposée dans un boîtier (5) au-dessous du fond.

4. Appareil selon l'une des revendications précédentes, **caractérisé en ce qu'**il est prévu un interrupteur pour l'unité de commande électronique (6), **en ce que** l'unité de commande électronique (6) comporte une horloge à minuterie (16) et **en ce que** l'unité de commande électronique (6) éteint l'appareil (1) au bout d'un temps déterminé.

5. Appareil selon l'une des revendications précédentes, **caractérisé en ce qu'**une ouverture du conteneur (2) déclenche un arrêt de l'émetteur (7).

6. Appareil selon l'une des revendications précédentes, **caractérisé en ce qu'**il est doté d'un dispositif de chauffage pour la matière aqueuse.

7. Appareil selon l'une des revendications 2 à 6, **caractérisé en ce qu'**il se présente sous la forme d'un ensemble comportant une amenée de courant et un module solaire (12).
